(19)

**Europäisches Patentamt**

**European Patent Office**

**Office européen des brevets**

(11) **EP 4 224 970 B1**

(12) **EUROPEAN PATENT SPECIFICATION**

(45) Date of publication and mention
of the grant of the patent:
**27.11.2024 Bulletin 2024/48**

(21) Application number: **23151129.6**

(22) Date of filing: **11.01.2023**

(51) International Patent Classification (IPC):
***H04W 72/20*** (2023.01)

(52) Cooperative Patent Classification (CPC):
**H04W 72/20**

(54) **A METHOD AND A DEVICE FOR CONFIGURING IUC MAC CE AND LCP OPERATING**

VERFAHREN UND VORRICHTUNG ZUR KONFIGURATION DES IUC-MAC-CE- UND
LCP-BETRIEBS

PROCÉDÉ ET DISPOSITIF DE CONFIGURATION D'UN CE MAC IUC ET D'UN FONCTIONNEMENT
LCP

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.02.2022 US 202263306485 P**

(43) Date of publication of application:
**09.08.2023 Bulletin 2023/32**

(73) Proprietor: **LG Electronics, Inc.**
**Yeongdeungpo-gu**
**Seoul 07336 (KR)**

(72) Inventors:
• **PARK, Giwon**
**06772 Seoul (KR)**
• **LEE, Seungmin**
**06772 Seoul (KR)**
• **BACK, Seoyoung**
**06772 Seoul (KR)**

(74) Representative: **Maikowski & Ninnemann**
**Patentanwälte Partnerschaft mbB**
**Postfach 15 09 20**
**10671 Berlin (DE)**

(56) References cited:
• **INTERDIGITAL: "Stage 2 Running CR of TS 38.300
for eSL", vol. RAN WG2, no. Electronic; 20220101,
31 January 2022 (2022-01-31), XP052104348,
Retrieved from the Internet
<URL:https://ftp.3gpp.org/tsg_ran/WG2_RL2/TS
GR2_116bis-e/Docs/R2-2201808.zip R2-2201808
Stage 2 Running CR of TS38_300 for eSL.docx>
[retrieved on 20220131]**
• **HUAWEI ET AL: "Consideration on resource
allocation enhancement", vol. RAN WG2, no.
Online; 20220117 - 20220125, 11 January 2022
(2022-01-11), XP052093651, Retrieved from the
Internet
<URL:https://ftp.3gpp.org/tsg_ran/WG2_RL2/TS
GR2_116bis-e/Docs/R2-2200485.zip R2-2200485
Consideration on resource allocation
enhancement.docx> [retrieved on 20220111]**
• **LG: "Summary of [POST116bis-e][707][V2X/SL]
Open issues on IUC, Phase 1", vol. RAN WG2, no.
electronic; 20220117 - 20220125, 28 January 2022
(2022-01-28), XP052122538, Retrieved from the
Internet
<URL:https://ftp.3gpp.org/tsg_ran/WG2_RL2/TS
GR2_116bis-e/Inbox/R2-2201807.zip R2-2201807
Summary of [POST116bis-e][707][V2XSL] Open
issues on IUC Phase-1.docx> [retrieved on
20220128]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 224 970 B1

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

3GPP change request R2-2201808 titled "Stage 2 Running CR of TS 38.300 for eSL" introduces the support of Rel17 features for SL DRX and resource allocation enhancements.

### SUMMARY

The present invention is defined in the appended claims.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows an IUC information reporting procedure of a receiving UE according to an embodiment of the present disclosure.
FIG. 9 shows an IUC information reporting procedure of a receiving UE, according to an embodiment of the present disclosure.
FIG. 10 shows a procedure in which a first device performs wireless communication, according to an embodiment of the present disclosure.
FIG. 11 shows a procedure in which a second device performs wireless communication, according to an embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

**DETAILED DESCRIPTION**

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1 GHz, middle frequency bands ranging from 1 GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in this specification, a wireless communication standard document published before the present specification is filed may be referred to.

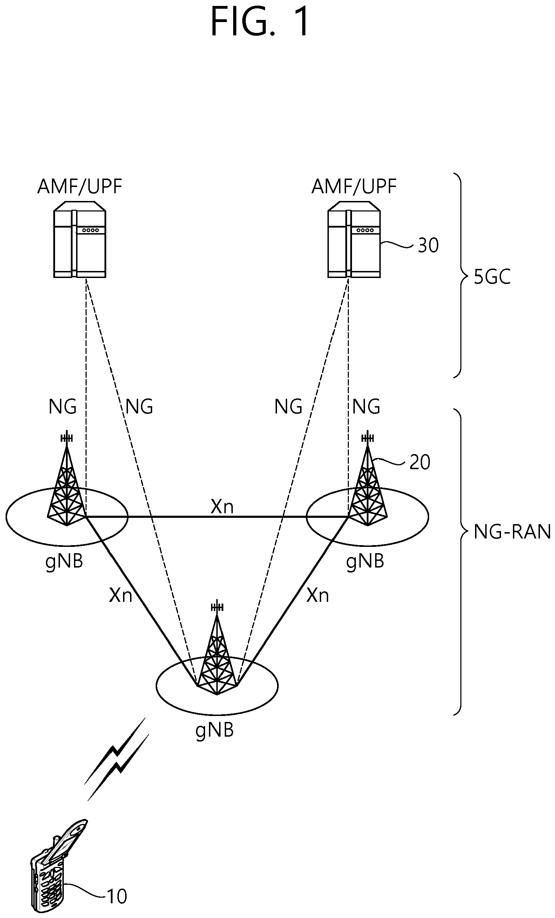

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

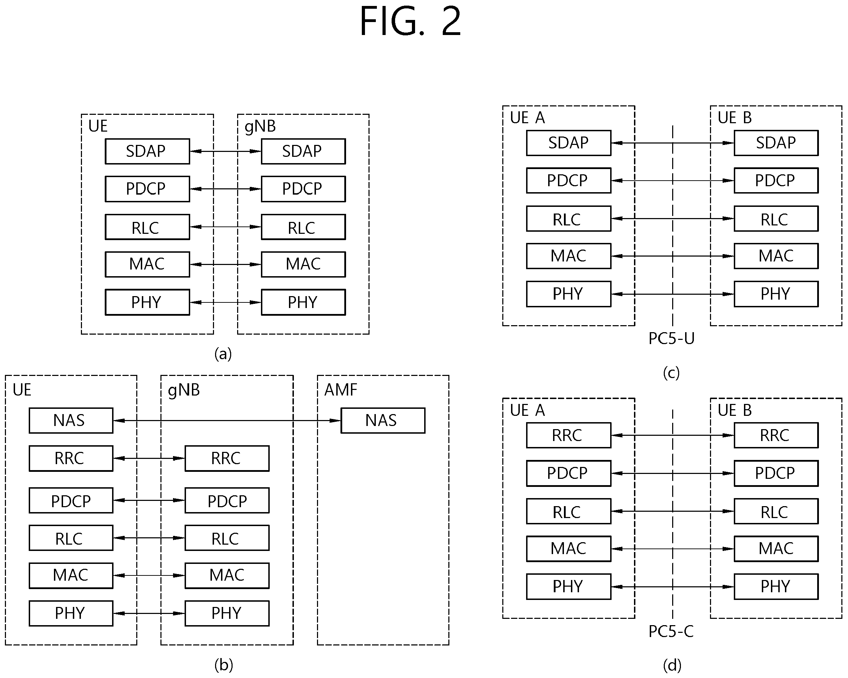

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC _CONNECTED state, and, otherwise, the UE may be in an RRC_IDLE state. In case of the NR, an RRC_INACTIVE state is additionally defined, and a UE being in the RRC _INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

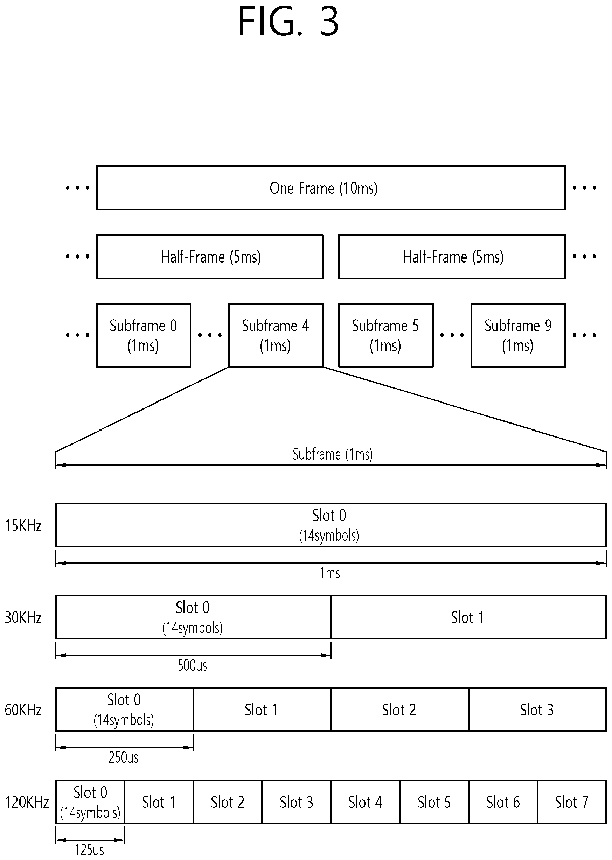

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120 240kHz |

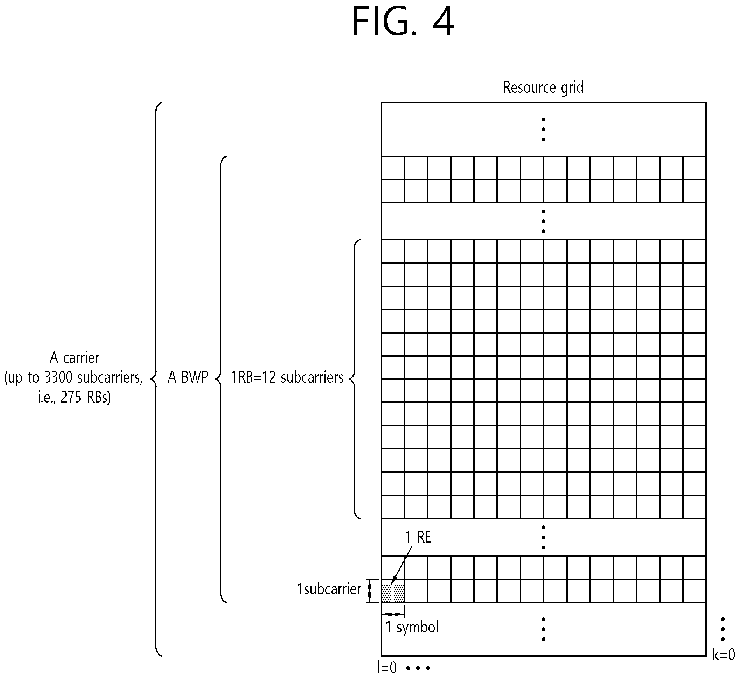

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

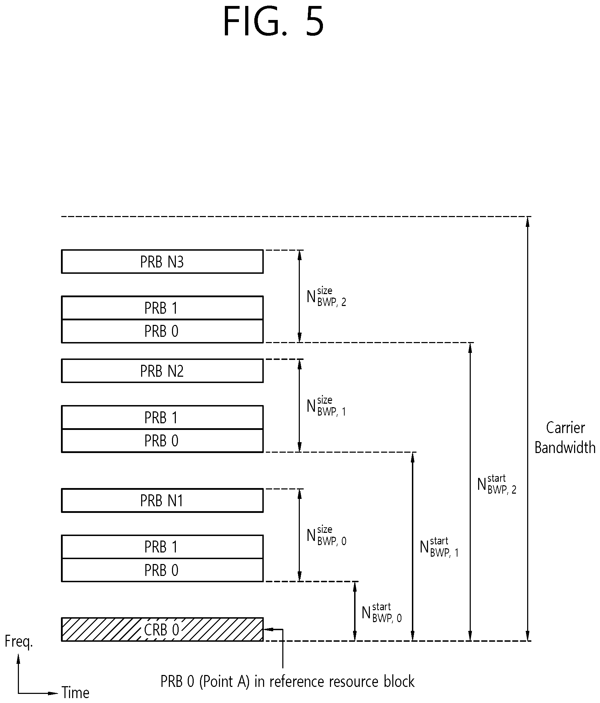

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

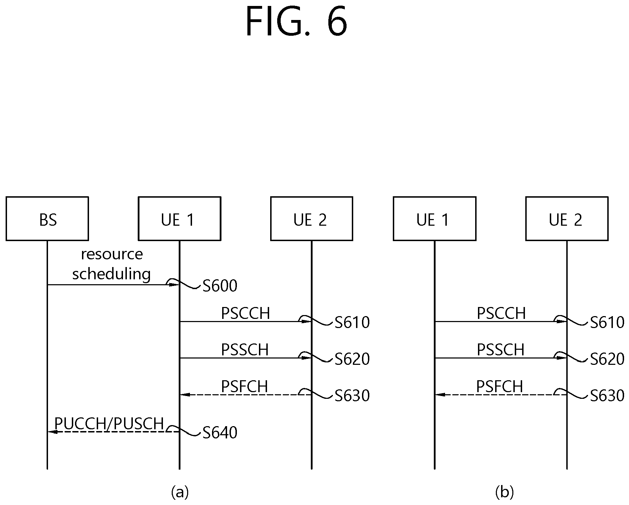

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
| --- | --- |
| 00 | SCI format 2-A |
| 01 | SCI format 2-B |
| 10 | Reserved |
| 11 | Reserved |

[Table 6]

| Value of the Number of DMRS port field | Antenna ports |
| --- | --- |
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
| --- | --- |
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

Hereinafter, a UE procedure for determining a subset of resources to be reported to a higher layer in PSSCH resource selection in sidelink resource allocation mode 2 will be described.

In resource allocation mode 2, a higher layer may request a UE to determine a subset of resources, from which the higher layer will select a resource for PSSCH/PSCCH transmission. To trigger this procedure, in slot n, a higher layer provides the following parameters for a PSSCH/PSCCH transmission.

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from whi ch the higher layer will select resources for PSSCH/PSCCH transmission as part of re-ev aluation or pre-emption procedure, the higher layer provides a set of resources $(r_0, r_1, r_2, ...)$ which may be subject to re-evaluation and a set of resources $(r'_0, r'_1, r'_2, ...)$ w hich may be subject to pre-emption.

- it is up to UE implementation to determine the subset of resources as requested by higher layers before or after the slot $r''_i - T_3$ , where $r''_i$ is the slot with the smallest slot index among $(r_0, r_1, r_2, ...)$ and $(r'_0, r'_1, r'_2, ...)$ , and $T_3$ is equal to $T^{SL}_{proc,1}$ , where $T^{SL}_{proc,1}$ is defined in slots in Table X1, where $\mu_{SL}$ is the SCS configuration of the SL B WP.

Following higher layer parameters affect this procedure:

- *sl-SelectionWindowList*: internal parameter $T_{2min}$ is set to the corresponding valu e from higher layer parameter *sl-SelectionWindowList* for the given value of *prio$_{Tx}$*.
- *sl-Thres-RSRP-List*: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j$ = *prio$_{Tx}$*.
- *sl-RS-ForSensing* selects if the UE uses the PSSCH-RSRP or PSCCH-RSRP measurement.
- *sl-ResourceReservePeriodList*
- *sl-SensingWindow:* internal parameter $T_0$ is defined as the number of slots corresp onding to *sl-SensingWindow* msec
- *sl-TxPercentageList*: internal parameter $X$ for a given *prio$_{TX}$* is defined as *sl-TxPercentageList (prio$_{TX}$)* converted from percentage to ratio
- *sl-PreemptionEnable*: if *sl-PreemptionEnable* is provided, and if it is not equal to 'enabled', internal parameter *prio$_{pre}$* is set to the higher layer provided parameter *sl-PreemptionEnable.*

The resource reservation interval, $P_{rsvp\_TX,}$ if provided, is converted from units of msec to units of logical slots, resulting in $P'_{rsvp\_TX}$.

Notation:

$(t'^{SL}_0, t'^{SL}_1, t'^{SL}_2, ...)$ denotes the set of slots which belongs to the sidelink resource pool.

For example, a UE may select a set of candidate resources $(S_A)$ based on Table 8. For example, when resource (re)selection is triggered, a UE may select a candidate resource set $(S_A)$ based on Table 8. For example, when re-evaluation or pre-emption is triggered, a UE may select a candidate resource set $(S_A)$ based on Table 8.

[Table 8]

The following steps are used:

1) A candidate single-slot resource for transmission $R_{x,y}$ is defined as a set of $L_{\text{subCH}}$ contiguous sub-channels with sub-channel $x+j$ in slot $t'^{SL}_y$ where $j = 0, \ldots, L_{\text{subCH}} - 1$. The UE shall assume that any set of $L_{\text{subCH}}$ contiguous sub-channels included in the corresponding resource pool within the time interval $[n + T_1, n + T_2]$ correspond to one candidate single-slot resource, where
   - selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;
   - if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).
   The total number of candidate single-slot resources is denoted by $M_{\text{total}}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the $i$-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:
   - the UE has not monitored slot $t'^{SL}_m$ in Step 2.
   - for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:
   a) the UE receives an SCI format 1-A in slot $t'^{SL}_m$, and *'Resource reservation period'* field, if present, and *'Priority'* field in the received SCI format 1-A indicate the values $P_{\text{rsvp\_RX}}$ and $prio_{RX}$, respectively;
   b) the RSRP measurement performed, for the received SCI format 1-A, is higher than $Th(prio_{RX}, prio_{TX})$;
   c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines the set of resource blocks and slots which overlaps with $R_{x,y+j \times P'_{rsvp\_TX}}$ for $q = 1, 2, \ldots, Q$ and $j = 0, 1, \ldots, C_{resel} - 1$. Here, $P'_{rsvp\_RX}$ is $P_{rsvp\_RX}$ converted to units of logical slots, $Q = \left\lceil \dfrac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot $n$ belongs to the set $\left( t'^{SL}_0, t'^{SL}_1, \ldots, t'^{SL}_{T'_{max}-1} \right)$, otherwise slot $t'^{SL}_{n'}$ is the first slot after slot $n$ belonging to the set $\left( t'^{SL}_0, t'^{SL}_1, \ldots, t'^{SL}_{T'_{max}-1} \right)$; otherwise $Q = 1$. $T_{scal}$ is set to selection window size $T_2$ converted to units of msec.

7) If the number of candidate single-slot resources remaining in the set $S_A$ is smaller than $X \cdot M_{\text{total}}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set $(r_0, r_1, r_2, \ldots)$ is not a member of $S_A$, then the UE shall report re-evaluation of the resource $r_i$ to higher layers.

If a resource $r'_i$ from the set $(r'_0, r'_1, r'_2, \ldots)$ meets the conditions below then the UE shall report pre-emption of the resource $r'_i$ to higher layers
   - $r'_i$ is not a member of $S_A$, and
   - $r'_i$ meets the conditions for exclusion in step 6, with $Th(prio_{RX}, prio_{TX})$ set to the final threshold after executing steps 1)-7), i.e. including all necessary increments for reaching $X \cdot M_{\text{total}}$, and
   - the associated priority $prio_{RX}$, satisfies one of the following conditions:
     - *sl-PreemptionEnable* is provided and is equal to 'enabled' and $prio_{TX} > prio_{RX}$
     - *sl-PreemptionEnable* is provided and is not equal to 'enabled', and $prio_{RX} < prio_{pre}$ and $prio_{TX} > prio_{RX}$

Meanwhile, partial sensing may be supported for power saving of a UE. For example, in LTE SL or LTE V2X, a UE may perform partial sensing based on Tables 9 and 10.

[Table 9]

| |
|---|
| In sidelink transmission mode 4, when requested by higher layers in subframe $n$ for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers.<br>In sidelink transmission mode 3, when requested by higher layers in subframe $n$ for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers.<br><br>$C_{resel}$ is determined by $C_{resel}$ =10*SL_RESOURCE_RESELECTION_COUNTER, where SL_RESOURCE_RESELECTION_COUNTER is provided by higher layers.<br>…<br>If partial sensing is configured by higher layers then the following steps are used:<br><br>1) A candidate single-subframe resource for PSSCH transmission $R_{x,y}$ is defined as a set of $L_{subCH}$ contiguous sub-channels with sub-channel $x+j$ in subframe $t_y^{SL}$ where $j = 0,..., L_{subCH} - 1$. The UE shall determine by its implementation a set of subframes which consists of at least $Y$ subframes within the time interval $[n + T_1, n + T_2]$ where selections of $T_1$ and $T_2$ are up to UE implementations under $T_1 \le 4$ and $T_{2\min}(prio_{TX}) \le T_2 \le 100$, if $T_{2\min}(prio_{TX})$ is provided by higher layers for $prio_{TX}$, otherwise $20 \le T_2 \le 100$. UE selection of $T_2$ shall fulfil the latency requirement and $Y$ shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.<br><br>2) If a subframe $t_y^{SL}$ is included in the set of subframes in Step 1, the UE shall monitor any subframe $t_{y-k\times P_{step}}^{SL}$ if k-th bit of the high layer parameter *gapCandidateSensing* is set to 1. The UE shall perform the behaviour in the following steps based on PSCCH decoded and S-RSSI measured in these subframes.<br><br>3) The parameter $Th_{a,b}$ is set to the value indicated by the i-th *SL-ThresPSSCH-RSRP* field in *SL-ThresPSSCH-RSRP-List* where $i = (a - 1) * 8 + b$.<br><br>4) The set $S_A$ is initialized to the union of all the candidate single-subframe resources. The set $S_B$ is initialized to an empty set.<br><br>5) The UE shall exclude any candidate single-subframe resource $R_{x,y}$ from the set $S_A$ if it meets all the following conditions:<br>  - the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.<br>  - PSSCH-RSRP measurement according to the received SCI format 1 is higher than $Th_{prio_{TX},prio_{RX}}$.<br>  - the SCI format received in subframe $t_m^{SL}$ or the same SCI format 1 which is assumed to be received in subframe(s) $t_{m+q\times P_{step}\times P_{rsvp\_RX}}^{SL}$ determines according to 14.1.1.4C the set of resource blocks and subframes which overlaps with $R_{x,y+j\times P'_{rsvp\_TX}}$ for q=1, 2, ..., Q and j=0, 1, ..., $C_{resel} - 1$. Here, $Q = \dfrac{1}{P_{rsvp\_RX}}$ if $P_{rsvp\_RX} < 1$ and $y'-m \le P_{step} \times P_{rsvp\_RX} + P_{step}$, where $t_{y'}^{SL}$ is the last subframe of the $Y$ subframes, and $Q = 1$ otherwise.<br><br>6) If the number of candidate single-subframe resources remaining in the set $S_A$ is smaller than $0.2 \cdot M_{total}$, then Step 4 is repeated with $Th_{a,b}$ increased by 3 dB. |

[Table 10]

7) For a candidate single-subframe resource $R_{x,y}$ remaining in the set $S_A$, the metric $E_{x,y}$ is defined as the linear average of S-RSSI measured in sub-channels $x+k$ for $k = 0, ..., L_{subCH} - 1$ in the monitored subframes in Step 2 that can be expressed by $t^{SL}_{y-P_{step}*j}$ for a non-negative integer $j$.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{x,y}$ is defined as a set of $L_{subCH}$ contiguous sub-channels with sub-channel $x+j$ in subframe $t^{SL}_y$ where $j = 0, ..., L_{subCH} - 1$. The UE shall assume that any set of $L_{subCH}$ contiguous sub-channels included in the corresponding PSSCH resource pool within the time interval $[n+T_1, n+T_2]$ corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

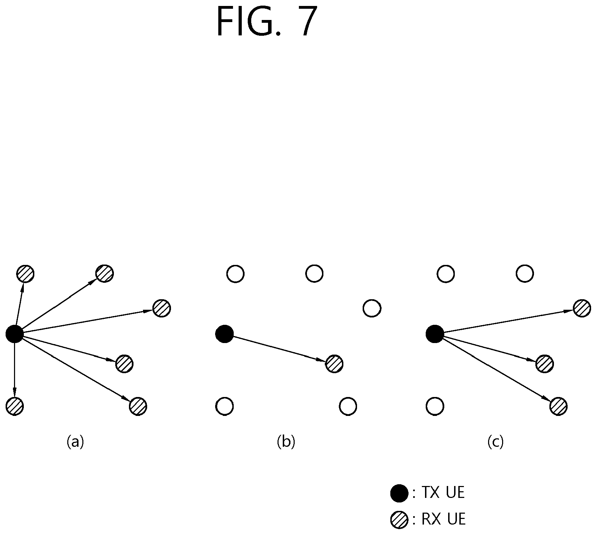

FIG. 7 shows three cast types, in accordance with an embodiment of the present disclosure. The embodiment of FIG. 7 may be combined with various embodiments of the present disclosure. Specifically, FIG. 7(a) shows broadcast-type SL communication, FIG. 7(b) shows unicast type-SL communication, and FIG. 7(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

In this specification, the "configure or define" wording may be interpreted as being (pre)configured (via pre-defined signaling (e.g., SIB, MAC signaling, RRC signaling)) from a base station or a network. For example, "A may be configured" may include "that a base station or network (pre-)configures/defines or informs A for a UE". Alternatively, the wording "configure or define" may be interpreted as being configured or defined in advance by a system. For example, "A may be configured" may include "A is configured/defined in advance by a system".

Referring to the standard document, some procedures and technical specifications related to the present disclosure are as follows.

[Table 11]

| 3GPP TS 38.321 V16.2.1 |
|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. <br><br> NOTE 1: If Sidelink resource allocation mode 1 is configured by RRC, a DRX functionality is not configured. <br><br> RRC controls DRX operation by configuring the following parameters: <br> - *drx-onDurationTimer*: the duration at the beginning of a DRX cycle; <br> - *drx-SlotOffset*: the delay before starting the *drx-onDurationTimer*; <br> - *drx-InactivityTimer*: the duration after the PDCCH occasion in which a PDCCH indicates a new UL or DL transmission for the MAC entity; <br> - *drx-RetransmissionTimerDL* (per DL HARQ process except for the broadcast process): the maximum duration until a DL retransmission is received; <br> - *drx-RetransmissionTimerUL* (per UL HARQ process): the maximum duration until a grant for UL retransmission is received; <br> - *drx-LongCycleStartOffset*: the Long DRX cycle and *drx-StartOffset* which defines the subframe where the Long and Short DRX cycle starts; <br> - *drx-ShortCycle* (optional): the Short DRX cycle; <br> - *drx-ShortCycleTimer* (optional): the duration the UE shall follow the Short DRX cycle; <br> - *drx-HARQ-RTT-TimerDL* (per DL HARQ process except for the broadcast process): the minimum duration before a DL assignment for HARQ retransmission is expected by the MAC entity; <br> - *drx-HARQ-RTT-TimerUL* (per UL HARQ process): the minimum duration before a UL HARQ retransmission grant is expected by the MAC entity; <br> - *ps-Wakeup* (optional): the configuration to start associated *drx-onDurationTimer* in case DCP is monitored but not detected; <br> - *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started; <br> - *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started. <br><br> Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer*, *drx-InactivityTimer*. The DRX parameters that are common to the DRX groups are: *drx-SlotOffset*, *drx-RetransmissionTimerDL*, *drx-RetransmissionTimerUL*, *drx-LongCycleStartOffset*, *drx-ShortCycle* (optional), *drx-ShortCycleTimer* (optional), *drx-HARQ-RTT-TimerDL*, and *drx-HARQ-RTT-TimerUL*. |

[Table 12]

When a DRX cycle is configured, the Active Time for Serving Cells in a DRX group includes the time while:
- *drx-onDurationTimer* or *drx-InactivityTimer* configured for the DRX group is running; or
- *drx-RetransmissionTimerDL* or *drx-RetransmissionTimerUL* is running on any Serving Cell in the DRX group; or
- *ra-ContentionResolutionTimer* (as described in clause 5.1.5) or *msgB-ResponseWindow* (as described in clause 5.1.4a) is running; or
- a Scheduling Request is sent on PUCCH and is pending (as described in clause 5.4.4); or
- a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a).

When DRX is configured, the MAC entity shall:
1> if a MAC PDU is received in a configured downlink assignment:
    2> start the *drx-HARQ-RTT-TimerDL* for the corresponding HARQ process in the first symbol after the end of the corresponding transmission carrying the DL HARQ feedback;
    2> stop the *drx-RetransmissionTimerDL* for the corresponding HARQ process.
1> if a MAC PDU is transmitted in a configured uplink grant and LBT failure indication is not received from lower layers:
    2> start the *drx-HARQ-RTT-TimerUL* for the corresponding HARQ process in the first symbol after the end of the first repetition of the corresponding PUSCH transmission;
    2> stop the *drx-RetransmissionTimerUL* for the corresponding HARQ process.
1> if a *drx-HARQ-RTT-TimerDL* expires:
    2> if the data of the corresponding HARQ process was not successfully decoded:
        3> start the *drx-RetransmissionTimerDL* for the corresponding HARQ process in the first symbol after the expiry of *drx-HARQ-RTT-TimerDL*.
1> if a *drx-HARQ-RTT-TimerUL* expires:
    2> start the *drx-RetransmissionTimerUL* for the corresponding HARQ process in the first symbol after the expiry of *drx-HARQ-RTT-TimerUL*.
1> if a DRX Command MAC CE or a Long DRX Command MAC CE is received:
    2> stop *drx-onDurationTimer* for each DRX group;
    2> stop *drx-InactivityTimer* for each DRX group.
1> if *drx-InactivityTimer* for a DRX group expires:
    2> if the Short DRX cycle is configured:
        3> start or restart *drx-ShortCycleTimer* for this DRX group in the first symbol after the expiry of *drx-InactivityTimer*;
        3> use the Short DRX cycle for this DRX group.
    2> else:
        3> use the Long DRX cycle for this DRX group.
1> if a DRX Command MAC CE is received:
    2> if the Short DRX cycle is configured:
        3> start or restart *drx-ShortCycleTimer* for each DRX group in the first symbol after the end of DRX Command MAC CE reception;
        3> use the Short DRX cycle for each DRX group.
    2> else:
        3> use the Long DRX cycle for each DRX group.

[Table 13]

1> if *drx-ShortCycleTimer* for a DRX group expires:
  2> use the Long DRX cycle for this DRX group.
1> if a Long DRX Command MAC CE is received:
  2> stop *drx-ShortCycleTimer* for each DRX group;
  2> use the Long DRX cycle for each DRX group.
1> if the Short DRX cycle is used for a DRX group, and [(SFN × 10) + subframe number] modulo (*drx-ShortCycle*) = (*drx-StartOffset*) modulo (*drx-ShortCycle*):
  2> start *drx-onDurationTimer* for this DRX group after *drx-SlotOffset* from the beginning of the subframe.
1> if the Long DRX cycle is used for a DRX group, and [(SFN × 10) + subframe number] modulo (*drx-LongCycle*) = *drx-StartOffset*:
  2> if DCP monitoring is configured for the active DL BWP as specified in TS 38.213 [6], clause 10.3:
    3> if DCP indication associated with the current DRX cycle received from lower layer indicated to start *drx-onDurationTimer*, as specified in TS 38.213 [6]; or
    3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap, or when the MAC entity monitors for a PDCCH transmission on the search space indicated by *recoverySearchSpaceId* of the SpCell identified by the C-RNTI while the *ra-ResponseWindow* is running (as specified in clause 5.1.4); or
    3> if *ps-Wakeup* is configured with value *true* and DCP indication associated with the current DRX cycle has not been received from lower layers:
      4> start *drx-onDurationTimer* after *drx-SlotOffset* from the beginning of the subframe.
  2> else:
    3> start *drx-onDurationTimer* for this DRX group after *drx-SlotOffset* from the beginning of the subframe.
NOTE 2: In case of unaligned SFN across carriers in a cell group, the SFN of the SpCell is used to calculate the DRX duration.
1> if a DRX group is in Active Time:
  2> monitor the PDCCH on the Serving Cells in this DRX group as specified in TS 38.213 [6];
  2> if the PDCCH indicates a DL transmission:
    3> start the *drx-HARQ-RTT-TimerDL* for the corresponding HARQ process in the first symbol after the end of the corresponding transmission carrying the DL HARQ feedback;
NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback.
    3> stop the *drx-RetransmissionTimerDL* for the corresponding HARQ process.
    3> if the PDSCH-to-HARQ_feedback timing indicate a non-numerical k1 value as specified in TS 38.213 [6]:
      4> start the *drx-RetransmissionTimerDL* in the first symbol after the PDSCH transmission for the corresponding HARQ process.

[Table 14]

2> if the PDCCH indicates a UL transmission:
  3> start the *drx-HARQ-RTT-TimerUL* for the corresponding HARQ process in the first symbol after the end of the first repetition of the corresponding PUSCH transmission;
  3> stop the *drx-RetransmissionTimerUL* for the corresponding HARQ process.
2> if the PDCCH indicates a new transmission (DL or UL) on a Serving Cell in this DRX group:
  3> start or restart *drx-InactivityTimer* for this DRX group in the first symbol after the end of the PDCCH reception.
2> if a HARQ process receives downlink feedback information and acknowledgement is indicated:
  3> stop the *drx-RetransmissionTimerUL* for the corresponding HARQ process.
1> if DCP monitoring is configured for the active DL BWP as specified in TS 38.213 [6], clause 10.3; and
1> if the current symbol n occurs within *drx-onDurationTimer* duration; and
1> if *drx-onDurationTimer* associated with the current DRX cycle is not started as specified in this clause:
  2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause:
    3> not transmit periodic SRS and semi-persistent SRS defined in TS 38.214 [7];
    3> not report semi-persistent CSI configured on PUSCH;
    3> if *ps-TransmitPeriodicL1-RSRP* is not configured with value *true*:
      4> not report periodic CSI that is L1-RSRP on PUCCH.
    3> if *ps-TransmitOtherPeriodicCSI* is not configured with value *true*:
      4> not report periodic CSI that is not L1-RSRP on PUCCH.
1> else:
  2> in current symbol n, if a DRX group would not be in Active Time considering grants/assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause:
    3> not transmit periodic SRS and semi-persistent SRS defined in TS 38.214 [7] in this DRX group;
    3> not report CSI on PUCCH and semi-persistent CSI configured on PUSCH in this DRX group.
  2> if CSI masking (*csi-Mask*) is setup by upper layers:
    3> in current symbol n, if *drx-onDurationTimer* of a DRX group would not be running considering grants/assignments scheduled on Serving Cell(s) in this DRX group and DRX Command MAC CE/Long DRX Command MAC CE received until 4 ms prior to symbol n when evaluating all DRX Active Time conditions as specified in this clause; and
      4> not report CSI on PUCCH in this DRX group.
NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s).

Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected.

The MAC entity needs not to monitor the PDCCH if it is not a complete PDCCH occasion (e.g. the Active Time starts or ends in the middle of a PDCCH occasion).

Meanwhile, in Release 17 NR sidelink (SL) operation, SL DRX operation will be newly supported. In the embodiment(s) of the present disclosure, an SL DRX command MAC CE operation method is proposed. In the following description, 'when, if, in case of may be replaced with 'based on'.

In addition, in the embodiment(s) of the present disclosure, a method for transferring recommended (or preferred) transmission resource information or assistance information for transmission resource selection for a UE performing an SL DRX operation to a counterpart UE through an inter UE coordination (IUC) MAC CE is proposed.

In addition, in the embodiment (s) of the present disclosure, when UEs transmit an IUC message to perform an IUC operation in NR V2X communication, logical channel (LCH) priority of an IUC message is newly defined so that the IUC message has a different priority from other sidelink messages (PC5 RRC message, MAC CE, SL Data), and an SL logical channel prioritization (LCP) operation based on the LCH priority of the newly defined IUC message is proposed. In the following description, 'when, if, in case of may be replaced with 'based on'.

According to an embodiment of the present disclosure, when UE-B (SL data transmitting UE) receives an IUC MAC CE from UE-A (UE transmitting the IUC MAC CE), UE-B may select a resource for SL data transmission by referring to the received IUC MAC CE information. In addition, UE-B may request transmission of an IUC MAC from UE-A by transmitting an IUC request MAC CE requesting IUC MAC transmission. For example, upon receiving the IUC request MAC CE from UE-B, UE-A may transmit an IUC MAC CE to UE-B.

For example, in the present disclosure, an IUC MAC CE refers to a MAC CE including IUC information (e.g., including preferred/non-preferred recommendation resource information), an IUC request MAC CE may refer to a MAC CE requesting an IUC MAC CE.

> 1. Type of IUC MAC CE (a MAC CE including IUC information)
> 1.1. Request based IUC MAC CE
> 1.1.1. IUC MAC CE transmitted by UE-A as a response when UE-A receives an IUC request MAC CE from UE-B
> 1.2. Condition based IUC MAC CE
> 1.2.1. Not a request based IUC MAC CE, but an IUC MAC CE transmitted by UE-A when triggered, since a specific condition is met

According to an embodiment of the present disclosure, a priority order of IUC messages and an LCP operation method may be provided.

In the present disclosure, the SL priority (or SL LCH priority) of an IUC message is defined as follows for an LCP operation of a MAC entity for an IUC message.

The following shows the SL priority of an IUC message. They are displayed in order of highest priority, i.e., data from SCCH may have the highest priority.

> 1. Data from SCCH (e.g., a PC5-S message, PC5 RRC message)
> 2. SL CSI reporting MAC CE
> 3. IUC MAC CE (or, the priority order of an IUC MAC CE is the same as that of an SL CSI reporting MAC CE, and may be higher than the priority order of an SL DRX command MAC CE.)
> 4. IUC request MAC CE (a MAC CE transmitted for requesting an IUC MAC CE)
> 5. SL DRX command MAC CE
> 6. Data from any STCH (e.g., SL user data)

Or,

> 1. Data from SCCH (e.g., a PC5-S message, PC5 RRC message)
> 2. SL CSI reporting MAC CE
> 3. IUC request MAC CE
> 4. IUC MAC CE
> 5. SL DRX command MAC CE
> 6. Data from any STCH (e.g., SL user data)

Or,

> 1. Data from SCCH (e.g., a PC5-S message, PC5 RRC message)
> 2. IUC MAC CE message
> 3. IUC request MAC CE
> 4. SL CSI reporting MAC CE
> 5. SL DRX command MAC CE
> 6. Data from any STCH (e.g., SL user data)

Or,

> 1. Data from SCCH (e.g., a PC5-S message, PC5 RRC message)
> 2. IUC request MAC CE
> 3. IUC MAC CE message
> 4. SL CSI reporting MAC CE
> 5. SL DRX command MAC CE
> 6. Data from any STCH (e.g., SL user data)

Or,

1. Data from SCCH (e.g., a PC5-S message, PC5 RRC message)
2. SL CSI reporting MAC CE
3. SL DRX command MAC CE
4. IUC MAC CE (or, the priority order of an IUC MAC CE may be the same as that of an SL DRX command MAC CE.)
5. IUC request MAC CE
6. Data from any STCH (e.g., SL user data)

Or,

1. Data from SCCH (e.g., a PC5-S message, PC5 RRC message)
2. SL CSI reporting MAC CE
3. SL DRX command MAC CE
4. IUC request MAC CE
5. IUC MAC CE (or, the priority order of IUC MAC CE may be the same as STCH.)
6. Data from any STCH (e.g., SL user data)

Or,

1. Data from SCCH (e.g., a PC5-S message, PC5 RRC message)
2. SL CSI reporting MAC CE
3. SL DRX command MAC CE
4. Data from any STCH (e.g., SL user data)
5. IUC MAC CE
6. IUC request MAC CE

Or,

1. Data from SCCH (e.g., a PC5-S message, PC5 RRC message)
2. SL CSI reporting MAC CE
3. SL DRX command MAC CE
4. Data from any STCH (e.g., SL user data)
5. IUC request MAC CE
6. IUC MAC CE

Or,

1. IUC MAC CE
2. IUC request MAC CE
3. Data from SCCH (e.g., a PC5-S message, PC5 RRC message)
4. SL CSI reporting MAC CE
5. SL DRX command MAC CE
6. Data from any STCH (e.g., SL user data)

Or,

1. IUC request MAC CE
2. IUC MAC CE (Or, the priority order of IUC MAC CE may be the same as SCCH.)
3. Data from SCCH (e.g., a PC5-S message, PC5 RRC message)
4. SL CSI reporting MAC CE
5. SL DRX command MAC CE
6. Data from any STCH (e.g., SL user data)

In the present disclosure, an LCP operation may be performed as follows according to the LCH priority of an IUC message proposed above.

For example, if a MAC entity of a UE has a plurality of MAC SDUs and MAC CEs for new transmission, the MAC entity may configure a MAC PDU by selecting a MAC SDU or a MAC CE in the order of a destination having the highest LCH priority (that is, according to the descending order of the SL LCH priorities or based on the descending order of the SL LCH priorities.). For example, if a MAC entity of a UE has a plurality of MAC SDUs and MAC CEs as follows, the MAC entity may perform an LCP operation (an operation of generating a MAC PDU) according to the LCH priority of the IUC MAC CE proposed in the present disclosure as follows.

Embodiment 1.

For example, a MAC entity of a UE may have a plurality of MAC SDUs and MAC CEs as follows.

    1. Data from SCCH (e.g., a PC5-S message, PC5 RRC message)
    2. IUC MAC CE message
    3. SL CSI reporting MAC CE

For example, according to the SL priority (or SL LCH priority) of an IUC MAC CE message proposed in this disclosure, a MAC entity can first fill a MAC PDU with the SDU for data from the SCCH. After filling the MAC PDU with the SDU for data from the SCCH, if space remains in the MAC PDU, the MAC entity can fill the MAC PDU with the IUC MAC CE message and the SL CSI reporting MAC CE in order. If all MAC SDUs and MAC CEs (data from SCCH, IUC MAC CE message, SL CSI reporting MAC CE) are not filled in one MAC PDU, the MAC entity may fill the MAC SDU and MAC CE into the MAC PDU in the order of SL priority proposed in the present disclosure. That is, a MAC PDU can be filled as much as possible in descending order of SL priority order.
For example, in Embodiment 1 is an embodiment where the SL priority of an IUC MAC CE message is higher than an SL CSI reporting MAC CE. If a proposal where the SL priority of an SL CSI reporting MAC CE is set to be higher than an IUC MAC CE message is applied, when a MAC entity configures a MAC PDU, the MAC PDU may be generated by first including the SL CSI reporting MAC CE in the MAC PDU rather than the IUC MAC CE message.

Embodiment 2.

For example, a MAC entity of a UE may have a plurality of MAC SDUs and MAC CEs as follows.

    1. IUC MAC CE message
    2. SL CSI reporting MAC CE
    3. Data from an STCH (e.g., SL user data)

For example, according to the SL priority (or SL LCH priority) of an IUC MAC CE message proposed in the present disclosure, a MAC entity may first fill a MAC PDU with the IUC MAC CE message. If space remains in a MAC PDU after filling the MAC PDU with an IUC MAC CE message, the MAC entity may sequentially fill the MAC PDU with an SL CSI MAC CE and an MAC SDU for data from an STCH. If one MAC PDU cannot be filled with all MAC CEs and MAC SDUs (IUC MAC CE message, SL CSI reporting MAC CE, data from STCH), the MAC entity may fill the MAC PDU with the MAC CE and the MAC SDU in the order of SL priority proposed in the present disclosure.
For example, the Embodiment 2 is an embodiment where the SL priority of an IUC MAC CE message is higher than that of an SL CSI reporting MAC CE. If a proposal where the SL priority of an SL CSI reporting MAC CE is set to be higher than an IUC MAC CE message is applied, when a MAC entity configures a MAC PDU, the MAC PDU may be generated by first including the SL CSI reporting MAC CE in the MAC PDU rather than the IUC MAC CE message.
According to an embodiment of the present disclosure, if a MAC entity of a UE has multiple MAC CEs, MAC SDUs, and IUC MAC CE messages to be transmitted to destination UEs, a method of configuring a MAC PDU by the MAC entity selecting a destination SDU or a destination MAC CE having the highest LCH priority based on the SL priority (or SL LCH priority) order proposed in this disclosure has been proposed.
For example, Embodiments 1 and 2 are each only just one embodiment, a UE may perform an operation of configuring or generating a MAC PDU according to various priority sequences for an IUC MAC CE proposed in the present disclosure.
According to an embodiment of the present disclosure, the following order of priority is also proposed.
For example, the following shows the SL priority of an IUC message. They are displayed in order of highest priority, that is, data from SCCH may have the highest priority.

    1. Data from SCCH (e.g., a PC5-S message, PC5 RRC message)
    2. SL CSI reporting MAC CE
    3. Request based IUC MAC CE (Or, the priority order of a request based IUC MAC CE may be the same as that of an SL CSI reporting MAC CE, and may be higher than that of an SL DRX command MAC CE.)

4. Condition based IUC MAC CE (Or, the priority order of a condition based IUC MAC CE may be the same as that of an SL CSI reporting MAC CE, and may be higher than that of an SL DRX command MAC CE. However, the order of priority may be lower than a request based IUC MAC CE.)
5. IUC request MAC CE (a MAC CE transmitted to request an IUC MAC CE)
6. SL DRX command MAC CE
7. Data from any STCH (e.g., SL user data)

Or,

1. Data from SCCH (e.g., a PC5-S message, PC5 RRC message)
2. SL CSI reporting MAC CE
3. IUC request MAC CE
4. Request based IUC MAC CE
5. Condition based IUC MAC CE
6. SL DRX command MAC CE
7. Data from any STCH (e.g., SL user data)

Or,

1. Data from SCCH (e.g., a PC5-S message, PC5 RRC message)
2. Request based IUC MAC CE message
3. Condition based IUC MAC CE message
4. IUC request MAC CE
5. SL CSI reporting MAC CE
6. SL DRX command MAC CE
7. Data from any STCH (e.g., SL user data)

Or,

1. Data from SCCH (e.g., a PC5-S message, PC5 RRC message)
2. IUC request MAC CE
3. Request based IUC MAC CE message
4. Condition based IUC MAC CE message
5. SL CSI reporting MAC CE
6. SL DRX command MAC CE
7. Data from any STCH (e.g., SL user data)

Or,

1. Data from SCCH (e.g., a PC5-S message, PC5 RRC message)
2. SL CSI reporting MAC CE
3. SL DRX command MAC CE
4. Request based IUC MAC CE (Or, the priority order of an IUC MAC CE may be the same as that of an SL DRX command MAC CE.)
5. Condition based IUC MAC CE (Or, the priority order of an IUC MAC CE may be the same as that of an SL DRX command MAC CE.)
6. IUC request MAC CE
7. Data from any STCH (e.g., SL user data)

Or,

1. Data from SCCH (e.g., a PC5-S message, PC5 RRC message)
2. SL CSI reporting MAC CE
3. SL DRX command MAC CE
4. IUC request MAC CE
5. Request based IUC MAC CE (or, the priority order of an IUC MAC CE may be the same as STCH.)
6. Condition based IUC MAC CE (or, the priority order of an IUC MAC CE may be the same as STCH.)
7. Data from any STCH (e.g., SL user data)

Or,

1. Data from SCCH (e.g., a PC5-S message, PC5 RRC message)
2. SL CSI reporting MAC CE
3. SL DRX command MAC CE
4. Data from any STCH (e.g., SL user data)
5. Request based IUC MAC CE
6. Condition based IUC MAC CE
7. IUC request MAC CE

Or,

1. Data from SCCH (e.g., a PC5-S message, PC5 RRC message)
2. SL CSI reporting MAC CE
3. SL DRX command MAC CE
4. Data from any STCH (e.g., SL user data)
5. IUC request MAC CE
6. Request based IUC MAC CE
7. Condition based IUC MAC CE

Or,

1. Request based IUC MAC CE
2. Condition based IUC MAC CE
3. IUC request MAC CE
4. Data from SCCH (e.g., a PC5-S message, PC5 RRC message)
5. SL CSI reporting MAC CE
6. SL DRX command MAC CE
7. Data from any STCH (e.g., SL user data)

Or,

1. IUC request MAC CE
2. Request based IUC MAC CE (or, the priority order of an IUC MAC CE may be the same as SCCH.)
3. Condition based IUC MAC CE (or, the priority order of an IUC MAC CE may be the same as SCCH.)
4. Data from SCCH (e.g., a PC5-S message, PC5 RRC message)
5. SL CSI reporting MAC CE
6. SL DRX command MAC CE
7. Data from any STCH (e.g., SL user data)

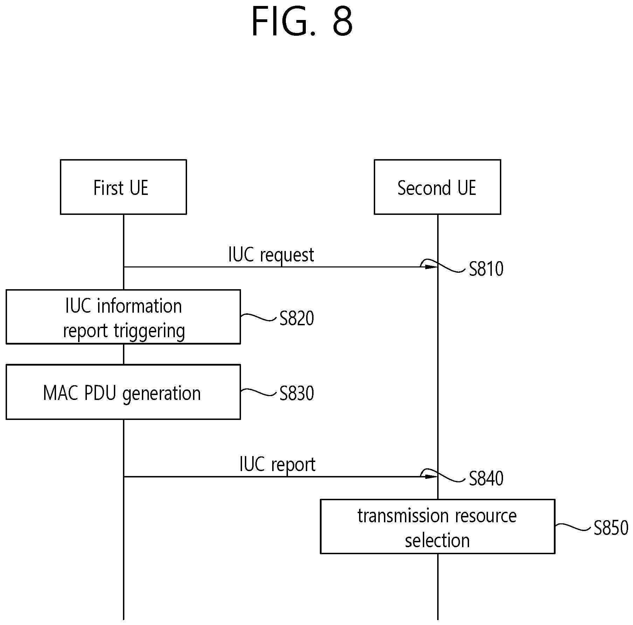

FIG. 8 shows a procedure for a second UE to select a transmission resource based on IUC information according to an embodiment of the present disclosure. The embodiment of FIG. 8 may be combined with various embodiments of the present disclosure.

Referring to FIG. 8, a first UE reporting IUC information based on an IUC request and a second UE transmitting an IUC request to select a transmission resource are represented. In step S810, a second UE may transmit an IUC request to a first UE. For example, the IUC request may include an IUC request MAC CE. In step S820, the first UE triggers an IUC information reporting procedure based on reception of the IUC request. For example, the IUC reporting procedure may be the request-based IUC information reporting procedure described in the present disclosure.

In step S830, the first UE generates a MAC PDU for reporting IUC information. Here, the first UE generates the MAC PDU based on an LCP procedure. Here, for example, the LCP procedure may be performed based on priorities between MAC SDUs and MAC CEs described in this disclosure. For example, when a plurality of MAC SDUs and MAC CEs to be transmitted are pending, they may be included in the MAC PDU in order of highest priority. For example, an IUC reporting MAC CE may have the highest priority, next, the priority of data from SCCH may be high, next, the priority of an SL SCI reporting MAC CE may be high, next, the priority of an SL DRX command MAC CE may be high, and next, the priority of data from STCH may be high. In this embodiment, it is assumed that the IUC reporting MAC CE is included in the MAC PDU as a result of the LCP procedure.

In step S840, the first UE transmits the generated MAC PDU to the second UE. That is, the first UE performs IUC report. For example, the IUC report MAC CE may include information related to a preferred resource set and/or a non-preferred resource set of the first UE. In step S850, the second UE may select a transmission resource based on the received IUC report, that is, the IUC report MAC CE included in the MAC PDU. Thereafter, the second UE may perform SL communication with the first UE based on the selected transmission resource. Here, since the preferred resource set and/or the non-preferred resource set are considered in the transmission resource selection, SL communication between the first UE and the second UE can be performed more smoothly.

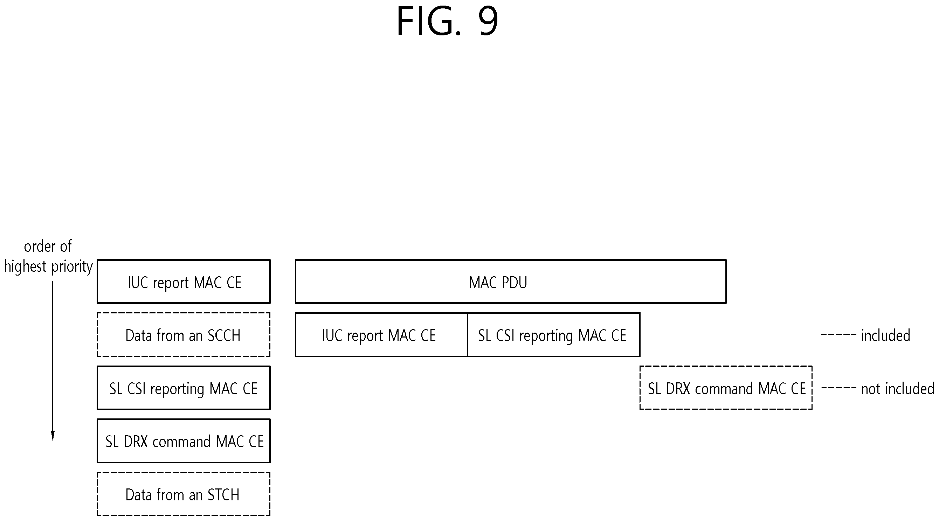

FIG. 9 shows an embodiment in which a MAC PDU is generated based on an LCP procedure according to an embodiment of the present disclosure. The embodiment of FIG. 9 may be combined with various embodiments of the present disclosure.

Referring to FIG. 9, the priority order between MAC CE and MAC SDU proposed in this disclosure is shown. Also, an example of generating a MAC PDU is shown. For example, an IUC reporting MAC CE may have the highest priority, next, the priority of data from SCCH may be high, next, the priority of an SL SCI reporting MAC CE may be high, next, the priority of an SL DRX command MAC CE may be high, and next, the priority of data from STCH may be high.

Among the portions showing the priority order on the left side of FIG. 9, blocks with solid lines represent MAC CEs or MAC SDUs that are pending to be included in MAC PDUs in a MAC entity. That is, in this embodiment, it is assumed that the IUC reporting MAC CE, SL SCI reporting MAC CE, and SL DRX command MAC CE are pending in the MAC entity.

Referring to the right side of FIG. 9, a MAC PDU is shown, and the horizontal length of the MAC PDU block represents the space of the MAC PDU described in this disclosure. That is, it can be interpreted that the space of the MAC PDU is insufficient to include all of the IUC report MAC CE, SL SCI report MAC CE, and SL DRX command MAC CE in the MAC PDU. Here, according to an LCP procedure, the MAC entity includes to a MAC PDU in the order of highest priority, and when there is insufficient space, it can generate the MAC PDU without including MAC CEs or MAC SDUs with low priorities. That is, in this embodiment, since the remaining space of the MAC PDU is insufficient to include the SL DRX command MAC CE having the lowest priority among MAC CEs or MAC SDUs pending in the MAC entity, the MAC entity may generate a MAC PDU by including only the IUC reporting MAC CE and the SL SCI reporting MAC CE.

UL/SL prioritization may be performed based on the SL priority value (or order) of an IUC message proposed in this disclosure. For example, the prioritization may be an operation of determining a transmission priority when uplink (UL) transmission and SL transmission are simultaneously pending in a UE.

According to an embodiment of the present disclosure, a Destination L(layer) 2 ID included in a MAC header, when transmitting an IUC message, is newly defined as an independent L2 ID for distinguishing transmission of an IUC message. For example, in the prior art, a destination L2 ID for a broadcast message, a destination L2 ID for a groupcast message, and a destination L2 ID for a unicast message are separately defined. Also, in the prior art, when multiplexing MAC PDUs, multiplexing (MUX) is supported only for the same cast type. That is, in unicast, MUX was possible only between unicasts, in groupcasts, MUX was possible only between groupcasts, and in broadcasts, MUX was possible only between broadcasts.

In this disclosure, an independent destination L2 ID for only IUC messages is defined. That is, according to an embodiment of the present disclosure, a method of allowing only IUC messages to be MUXed when a MAC entity performs MUX of a MAC PDU is proposed. That is, a method in which MAC PDUs other than IUC messages and IUC messages are not MUXed to the same MAC PDU is proposed. In addition, the independent destination L2 ID for only an IUC message may be a common destination L2 ID regardless of broadcast/groupcast/unicast (ie, cast type). That is, for example, a UE can perform broadcast/groupcast/unicast based on the common destination L2 ID. That is, the common destination L2 ID may be available in all cast types.

Alternatively, for example, the independent destination L2 ID for only an IUC message may be defined as an individual destination L2 ID separately divided into broadcast/groupcast/unicast. That is, in order to transmit an IUC message by unicast, an unicast destination L2 ID for an IUC message may be used, in order to transmit an IUC message by groupcast, a groupcast destination L2 ID for an IUC message may be used, in order to transmit an IUC message by broadcast, a broadcast destination L2 ID for an IUC message may be used.

According to an embodiment of the present disclosure, a method of transmitting an IUC message using the same unicast destination L2 ID, groupcast destination L2 ID, and broadcast L2 ID used in the prior art (Release 16 NR V2X) is also proposed. When an IUC message is transmitted using a conventional (unicast/groupcast/broadcast) destination L2 ID, a receiving UE receives the corresponding message and may not be able to distinguish whether the message is an IUC message or not. Therefore, in the present disclosure, a method of adding a classification identifier, indicating that the PSSCH related to the corresponding SCI is an IUC message, in SCI is proposed. For example, through this, even if a transmitting UE transmits an IUC message using the same unicast destination L2 ID, groupcast destination L2 ID, and broadcast L2 ID used in the prior art (Release 16 NR V2X), a receiving UE may receive the message and may be able to determine whether the corresponding message is an IUC message through SCI.

According to an embodiment of the present disclosure, a method of configuring, by a MAC entity, a MAC PDU by selecting a destination SDU or a destination MAC CE having the highest LCH priority based on the SL priority (or SL LCH priority) order proposed in the present disclosure, if the UE MAC entity has multiple MAC CEs, MAC SDUs, and IUC MAC CE messages to be transmitted to destination UEs is proposed. In addition, a method in which a receiving UE can distinguish and receive an IUC message has also been proposed.

For example, the operation of the proposal of the present disclosure may be limitedly applied for each PC5-RRC connection (or SL unicast link, or source/destination L2 ID pair, or direction of a source/destination L2 ID pair, or direction). For example, the operation of the proposal of the present disclosure may be limitedly applied for each of all PC5-RRC connections (or all SL unicast link, or all source/destination L2 ID pair).

The SL DRX configuration mentioned in this disclosure may include at least one or more of the following parameters.

[Table 15]

| • Sidelink DRX configurations |
|---|
| ✓ *SL drx-onDurationTimer*: the duration at the beginning of a SL DRX Cycle; |
| ✓ *SL drx-SlotOffset*: the delay before starting the sl *drx-onDurationTimer*; |
| ✓ *SL drx-InactivityTimer*: the duration after the PSCCH occasion in which a PSCCH indicates a new SL transmission for the MAC entity; |
| ✓ *SL drx-StartOffset*: the subframe where the SL DRX cycle start; |
| ✓ *SL drx-Cycle*: the SL DRX cycle; |
| ✓ *SL drx-HARQ-RTT-Timer* (per HARQ process or per sidelink process): the minimum duration before an assignment for HARQ retransmission is expected by the MAC entity. |
| ✓ *SL drx-RetransmissionTimer* (per HARQ process or per sidelink process): the maximum duration until a retransmission is received |

For example, a Uu DRX timer mentioned in this disclosure may be used for the following purposes.

drx-HARQ-RTT-TimerSL timer: it may represent a period in which a transmitting UE (UE that supports Uu DRX operation) performing sidelink communication based on sidelink resource allocation mode 1 does not perform PDCCH (or DCI) monitoring for sidelink mode 1 resource allocation from a base station.

drx-RetransmissionTimerSL timer: it may represent a period in which a transmitting UE (UE that supports Uu DRX operation) performing sidelink communication based on sidelink resource allocation mode 1 performs PDCCH (or DCI) monitoring for sidelink mode 1 resource allocation from a base station. For example, the drx-RetransmissionTimerSL timer may start when drx-HARQ-RTT-TimerSL expires.

For example, the following SL DRX timer mentioned in this disclosure may be used for the following purposes.

SL DRX on-duration timer: it may represent a period in which a UE performing SL DRX operation should operate in active time by default to receive a PSCCH/PSSCH of the other UE.

SL DRX inactivity timer: it may represent a period in which a UE performing SL DRX operation extends an SL DRX on-duration period, which is a period in which the UE must operate in active time by default to receive the PSCCH/PSSCH of the other UE. That is, an SL DRX on-duration timer may be extended by the SL DRX inactivity timer period. In addition, when a UE receives a PSCCH (1st SCI and 2nd SCI) for a new TB from the counterpart UE or receives a new packet (new PSSCH transmission), the UE may extend the SL DRX on-duration timer by starting the SL DRX inactivity timer.

SL DRX HARQ RTT timer: it may represent a period in which a UE performing SL DRX operation operates in sleep mode until receiving a retransmission packet (or PSSCH assignment) transmitted by the other UE. That is, when a UE starts an SL DRX HARQ RTT timer, the UE can operate in sleep mode during the timer running time, by determining that the counterpart UE will not transmit an SL retransmission packet to itself until the SL DRX HARQ RTT timer expires. Alternatively, the UE may not perform monitoring of a sidelink channel/signal transmitted by a transmitting UE.

SL DRX retransmission timer: it may represent a period in which a UE performing SL DRX operation operates as an active time to receive a retransmission packet (or PSSCH allocation) transmitted by the other UE. For example, when an SL DRX HARQ RTT timer expires, an SL DRX retransmission timer may start. During the corresponding timer period, the UE may monitor reception of a retransmitted SL packet (or PSSCH allocation) transmitted by the counterpart UE. For example, an SL DRX retransmission timer may start when an SL DRX HARQ RTT timer expires.

In addition, in the following description, the names of the timers (SL DRX on-duration timer, SL DRX inactivity timer, SL DRX HARQ RTT timer, SL DRX retransmission timer, etc.) are exemplary, timers performing the same/similar functions based on the contents described in each timer may be regarded as the same/similar timers regardless of their names.

The proposal of the present disclosure is a solution that can be applied and extended as a way to solve a problem in which loss occurs due to interference occurring when switching a Uu bandwidth part (BWP).

In addition, for example, when a UE supports a plurality of SL BWPs, it is a solution that can be applied and extended as a method to solve the problem of loss due to interference occurring during SL BWP switching.

The proposal of the present disclosure may be extended and applied to parameters (and timers) included in UE pair specific SL DRX configuration, UE pair specific SL DRX pattern, or UE pair specific SL DRX configuration, not only to parameters (and timers) included in default/common SL DRX configurations or default/common SL DRX patterns or default/common SL DRX configurations.

Also, for example, the on-duration term mentioned in the proposal of the present disclosure may be interpreted as an active time interval, and the off-duration term may be interpreted as a sleep time interval. For example, an active time may mean a period in which a UE operates in a wake up state (a state in which an RF module is On) to receive/transmit a radio signal. For example, a sleep time may mean a period in which a UE operates in a sleep mode state (a state in which an RF module is off) for power saving. For example, a sleep time interval does not mean that a transmitting UE must operate in a sleep mode. That is, if necessary, the UE may be allowed to operate in an active time for a while to perform a sensing operation/transmission operation even during a sleep time period.

For example, whether the (a part of) proposed method/rule of the present disclosure is applied and/or related parameters (e.g., threshold values) may be configured specifically (or differently, or independently) according to resource pool, congestion level, service priority (and/or type), QoS requirements (e.g., delay, reliability) or PQI, traffic type (e.g., (non-) periodic generation), SL transmission resource allocation mode (Mode 1, Mode 2), Tx profile (e.g., a Tx profile indicating that it is service supporting an SL DRX operation, a Tx profile indicating that it is service do not need to support an SL DRX operation), etc.

For example, whether the proposed rule of the present disclosure is applied (and/or related parameter configuration value) may be configured specifically (and/or independently and/or differently) for at least one of whether a UL BWP is activated/inactivated, whether an SL BWP is activated/inactivated, a resource pool (e.g., a resource pool where a PSFCH is configured, a resource pool where a PSFCH is not configured), service/packet type (and/or priority), QoS profile or QoS requirements (e.g., URLLC/EMBB traffic, reliability, delay), PQI, PFI, cast type (e.g., unicast, groupcast, broadcast), (resource pool) congestion level (e.g., CBR), SL HARQ feedback scheme (e.g., NACK Only feedback) , ACK/NACK feedback), the case of HARQ feedback enabled MAC PDU (and/or HARQ feedback disabled MAC PDU) transmission, the case of PUCCH-based SL HARQ feedback reporting operation configuration, pre-emption (and/or re-evaluation) (non-)performance (or based resource reselection), (L2 or L1) (source and/or destination) identifier, (L2 or L1) (combination of source layer ID and destination layer ID) identifier, (L2 or L1) (source layer ID and destination layer ID pair, and cast type combination) identifier, a direction of a pair of source layer ID and destination layer ID, PC5 RRC connection/link, SL DRX (non) performing (or supporting) case, an SL mode type (resource allocation mode 1, resource allocation mode 2), (a)periodic resource reservation execution, a Tx profile (e.g., a Tx profile indicating that it is service supporting an SL DRX operation, a Tx profile indicating that it is service do not need to support an SL DRX operation).

For example, the certain time term mentioned in the proposal of this disclosure may represent a time during which a UE operates as an active time for a predefined time or a specific timer (SL DRX retransmission timer, SL DRX inactivity timer, or timer guaranteeing to operate as active time in DRX operation of a receiving UE) time to receive an SL signal or SL data from a counterpart UE.

Also, for example, whether the proposal and proposal rule of the present disclosure are applied (and/or related parameter configuration values) may also be applied to mmWave SL operation.

According to the existing technology, there may be a problem in that a receiving UE performing sidelink communication performs a receiving operation based on a resource selected by a transmitting UE regardless of whether the receiving UE prefers the resource or not. According to an embodiment of the present disclosure, a transmitting UE may select a transmission resource based on a set of preferred resources (or non-preferred resources) included in IUC information provided by a receiving UE, so an effect of allowing a receiving UE to perform a receiving operation based on its preferred resource may occur.

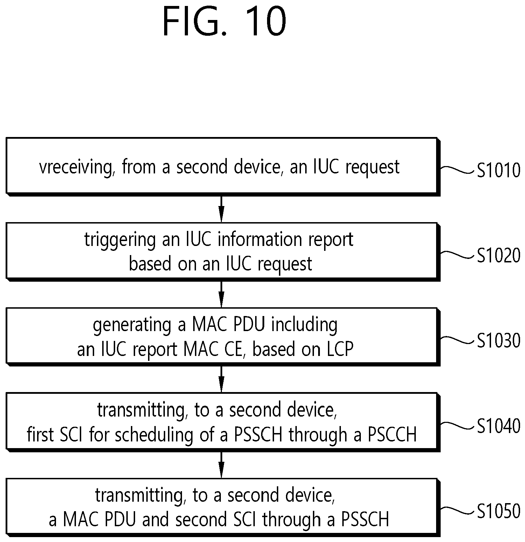

FIG. 10 shows a procedure for performing wireless communication by a first device according to an embodiment of the present disclosure. The embodiment of FIG. 10 may be combined with various embodiments of the present disclosure.

Referring to FIG. 10, in step S1010, a first device receives, from a second device, an inter UE coordination, IUC, request. In step S 1020, the first device triggers an IUC information report based on the IUC request. In step S1030, the first device generates a medium access control, MAC, protocol data unit, PDU, including an IUC report MAC control element, CE, based on logical channel prioritization, LCP. In step S 1040, the first device transmits, to the second device, first sidelink control information, SCI, for scheduling of a physical sidelink shared channel, PSSCH, through a physical sidelink control channel, PSCCH. In step S 1050, the first device transmits, to the second device, the MAC PDU and second SCI through the PSSCH. For example, in a procedure related to the LCP: a priority of the IUC report MAC CE may be lower than a priority of data from a sidelink control channel, SCCH, and a priority of a MAC CE for an SL channel state information, CSI, report; and the priority of the IUC report MAC CE may be higher than a priority of an SL discontinuous reception, DRX, command MAC CE and a priority of data from a sidelink traffic channel, STCH.

For example, the priority of data from an SCCH may be higher than the priority of a MAC CE for an SL CSI report.

For example, the priority of an SL DRX command MAC CE may be higher than the priority of data from an STCH.

For example, a priority of a request based IUC report MAC CE may be higher than a priority of a condition based IUC report MAC CE.

For example, the procedure related to the LCP may be performed based on remaining space of a MAC PDU.

For example, at least one transmission resource may be selected by the second device, based on the IUC report MAC CE.

For example, the IUC report MAC CE may include information related to a preferred resource set.

According to the invention, the IUC report MAC CE includes information related to a non-preferred resource set.

For example, the procedure related to the LCP may be for including a MAC serving data unit, SDU, or a MAC CE in the MAC PDU in order of priority of a related logical channel, LCH.

For example, a MAC PDU including an IUC report MAC CE being multiplexed based on a same destination layer, L, 2 ID as a MAC PDU not including an IUC report MAC CE may be not allowed.

For example, a destination L2 ID related to the MAC PDU including the IUC report MAC CE may be available for broadcast, groupcast, and unicast.

For example, the first SCI or the second SCI may include information related to whether the MAC PDU includes the IUC report MAC CE.

For example, the MAC PDU may be generated based on a radio resource control, RRC, connection being established between the first device and the second device.

The above-described embodiment may be applied to various devices described below. First, a processor 102 of a first device 100 may control a transceiver 106 to receive, from a second device 200, an inter UE coordination, IUC, request. And, the processor 102 of the first device 100 may trigger an IUC information report based on the IUC request. And, the processor 102 of the first device 100 may generate a medium access control, MAC, protocol data unit, PDU, including an IUC report MAC control element, CE, based on logical channel prioritization, LCP. And, the processor 102 of the first device 100 may control the transceiver 106 to transmit, to the second device 200, first sidelink control information, SCI, for scheduling of a physical sidelink shared channel, PSSCH, through a physical sidelink control channel, PSCCH. And, the processor 102 of the first device 100 may control the transceiver 106 to transmit, to the second device 200, the MAC PDU and second SCI through the PSSCH. For example, in a procedure related to the LCP: a priority of the IUC report MAC CE may be lower than a priority of data from a sidelink control channel, SCCH, and a priority of a MAC CE for an SL channel state information, CSI, report; and the priority of the IUC report MAC CE may be higher than a priority of an SL discontinuous reception, DRX, command MAC CE and a priority of data from a sidelink traffic channel, STCH.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: receive, from a second device, an inter UE coordination, IUC, request; trigger an IUC information report based on the IUC request; generate a medium access control, MAC, protocol data unit, PDU, including an IUC report MAC control element, CE, based on logical channel prioritization, LCP; transmit, to the second device, first sidelink control information, SCI, for scheduling of a physical sidelink shared channel, PSSCH, through a physical sidelink control channel, PSCCH; and transmit, to the second device, the MAC PDU and second SCI through the PSSCH, wherein in a procedure related to the LCP: a priority of the IUC report MAC CE may be lower than a priority of data from a sidelink control channel, SCCH, and a priority of a MAC CE for an SL channel state information, CSI, report; and the priority of the IUC report MAC CE may be higher than a priority of an SL discontinuous reception, DRX, command MAC CE and a priority of data from a sidelink traffic channel, STCH.

For example, the priority of data from an SCCH may be higher than the priority of a MAC CE for an SL CSI report.

For example, the priority of an SL DRX command MAC CE may be higher than the priority of data from an STCH.

For example, a priority of a request based IUC report MAC CE may be higher than a priority of a condition based IUC report MAC CE.

For example, the procedure related to the LCP may be performed based on remaining space of a MAC PDU.

For example, at least one transmission resource may be selected by the second device, based on the IUC report MAC CE.

For example, the IUC report MAC CE may include information related to a preferred resource set.

For example, the IUC report MAC CE may include information related to a non-preferred resource set.

For example, the procedure related to the LCP may be for including a MAC serving data unit, SDU, or a MAC CE in the MAC PDU in order of priority of a related logical channel, LCH.

For example, a MAC PDU including an IUC report MAC CE being multiplexed based on a same destination layer(L)2 ID as a MAC PDU not including an IUC report MAC CE may be not allowed.

For example, a destination L2 ID related to the MAC PDU including the IUC report MAC CE may be available for broadcast, groupcast, and unicast.

For example, the first SCI or the second SCI may include information related to whether the MAC PDU includes the IUC report MAC CE.

For example, the MAC PDU may be generated based on a radio resource control, RRC, connection being established between the first device and the second device.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: receive, from a second UE, an inter UE coordination, IUC, request; trigger an IUC information report based on the IUC request; generate a medium access control, MAC, protocol data unit, PDU, including an IUC report MAC control element, CE, based on logical channel prioritization, LCP; transmit, to the second UE, first sidelink control information, SCI, for scheduling of a physical sidelink shared channel, PSSCH, through a physical sidelink control channel, PSCCH; and transmit, to the second UE, the MAC PDU and second SCI through the PSSCH, wherein in a procedure related to the LCP: a priority of the IUC report MAC CE may be lower than a priority of data from a sidelink control channel, SCCH, and a priority of a MAC CE for an SL channel state information, CSI, report; and the priority of the IUC report MAC CE may be higher than a priority of an SL discontinuous reception, DRX, command MAC CE and a priority of data from a sidelink traffic channel, STCH.

According to an embodiment of the present disclosure, a non-transitory computer-readable storage medium storing instructions may be proposed. For example, the instructions, when executed, may cause a first device to: receive, from a second device, an inter UE coordination, IUC, request; trigger an IUC information report based on the IUC request; generate a medium access control, MAC, protocol data unit, PDU, including an IUC report MAC control element, CE, based on logical channel prioritization, LCP; transmit, to the second device, first sidelink control information, SCI, for scheduling of a physical sidelink shared channel, PSSCH, through a physical sidelink control channel, PSCCH; and transmit, to the second device, the MAC PDU and second SCI through the PSSCH, wherein in a procedure related to the LCP: a priority of the IUC report MAC CE may be lower than a priority of data from a sidelink control channel, SCCH, and a priority of a MAC CE for an SL channel state information, CSI, report; and the priority of the IUC report MAC CE may be higher than a priority of an SL discontinuous reception, DRX, command MAC CE and a priority of data from a sidelink traffic channel, STCH.

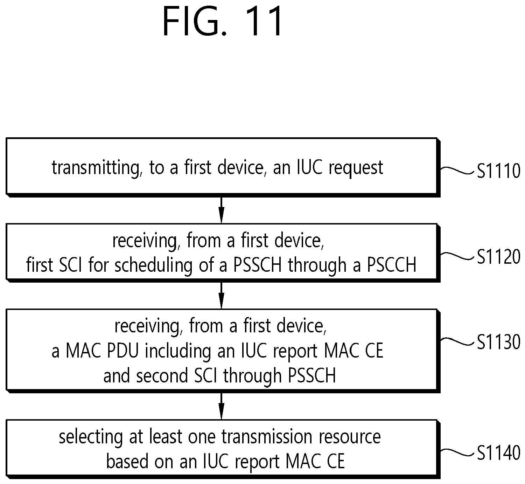

FIG. 11 shows a procedure for performing wireless communication by a second device according to an embodiment of the present disclosure. The embodiment of FIG. 11 may be combined with various embodiments of the present disclosure.

Referring to FIG. 11, in step S1110, a second device may transmit, to a first device, an inter UE coordination, IUC, request. In step S1 120, the second device may receive, from the first device, first sidelink control information, SCI, for scheduling of a physical sidelink shared channel, PSSCH, through a physical sidelink control channel, PSCCH. In step S1130, the second device may receive, from the first device, a medium access control, MAC, protocol data unit, PDU, including an IUC report MAC control element, CE, and second SCI through the PSSCH. In step S1140, the second device may select at least one transmission resource based on the IUC report MAC CE. For example, the MAC PDU may be generated based on logical channel prioritization (LCP), and wherein in a procedure related to the LCP: a priority of the IUC report MAC CE may be lower than a priority of data from a sidelink control channel, SCCH, and a priority of a MAC CE for an SL channel state information, CSI, report; and the priority of the IUC report MAC CE may be higher than a priority of an SL discontinuous reception, DRX, command MAC CE and a priority of data from a sidelink traffic channel, STCH.

For example, the priority of data from an SCCH may be higher than the priority of a MAC CE for an SL CSI report, and the priority of an SL DRX command MAC CE may be higher than the priority of data from an STCH.

The above-described embodiment may be applied to various devices described below. First, a processor 202 of a second device 200 may control a transceiver 206 to transmit, to a first device 100, an inter UE coordination, IUC, request. And, the processor 202 of the second device 200 may control the transceiver 206 to receive, from the first device 100, first sidelink control information, SCI, for scheduling of a physical sidelink shared channel, PSSCH, through a physical sidelink control channel, PSCCH. And, the processor 202 of the second device 200 may control the transceiver 206 to receive, from the first device 100, a medium access control, MAC, protocol data unit, PDU, including an IUC report MAC control element, CE, and second SCI through the PSSCH. And, the processor 202 of the second device 200 may select at least one transmission resource based on the IUC report MAC CE. For example, the MAC PDU may be generated based on logical channel prioritization, LCP, and wherein in a procedure related to the LCP: a priority of the IUC report MAC CE may be lower than a priority of data from a sidelink control channel, SCCH, and a priority of a MAC CE for an SL channel state information, CSI, report; and the priority of the IUC report MAC CE may be higher than a priority of an SL discontinuous reception, DRX, command MAC CE and a priority of data from a sidelink traffic channel, STCH.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: transmit, to a first device, an inter UE coordination, IUC, request; receive, from the first device, first sidelink control information, SCI, for scheduling of a physical sidelink shared channel, PSSCH, through a physical sidelink control channel, PSCCH; receive, from the first device, a medium access control, MAC, protocol data unit, PDU, including an IUC report MAC control element, CE, and second SCI through the PSSCH; and select at least one transmission resource based on the IUC report MAC CE, wherein the MAC PDU is generated based on logical channel prioritization, LCP, and wherein in a procedure related to the LCP: a priority of the IUC report MAC CE may be lower than a priority of data from a sidelink control channel, SCCH, and a priority of a MAC CE for an SL channel state information, CSI, report; and the priority of the IUC report MAC CE may be higher than a priority of an SL discontinuous reception, DRX, command MAC CE and a priority of data from a sidelink traffic channel, STCH.

For example, the priority of data from an SCCH may be higher than the priority of a MAC CE for an SL CSI report, and wherein the priority of an SL DRX command MAC CE may be higher than the priority of data from an STCH.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

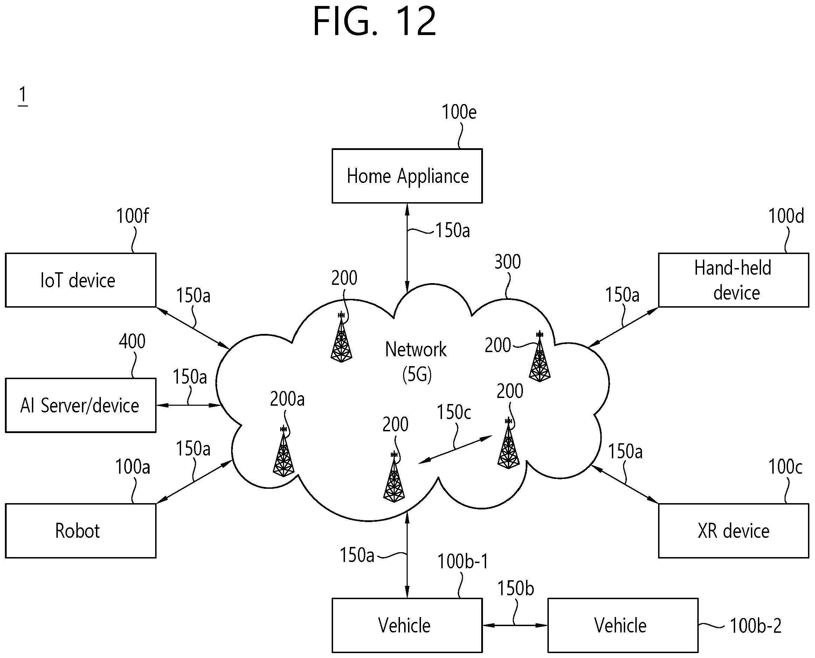

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

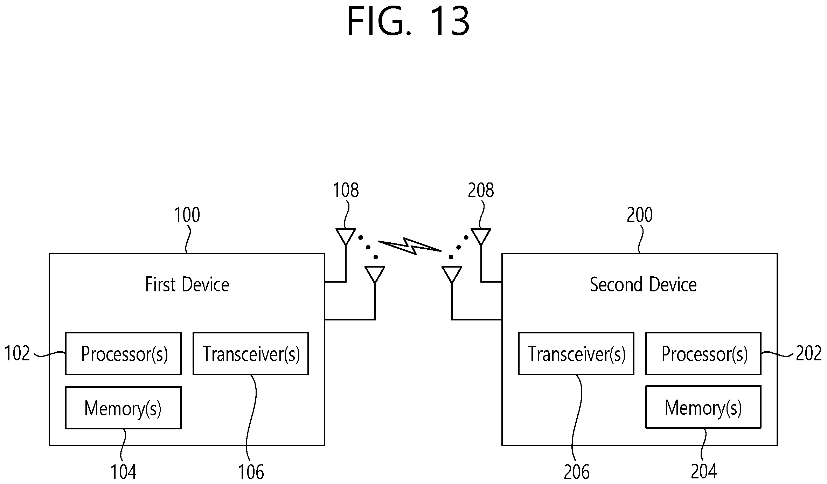

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

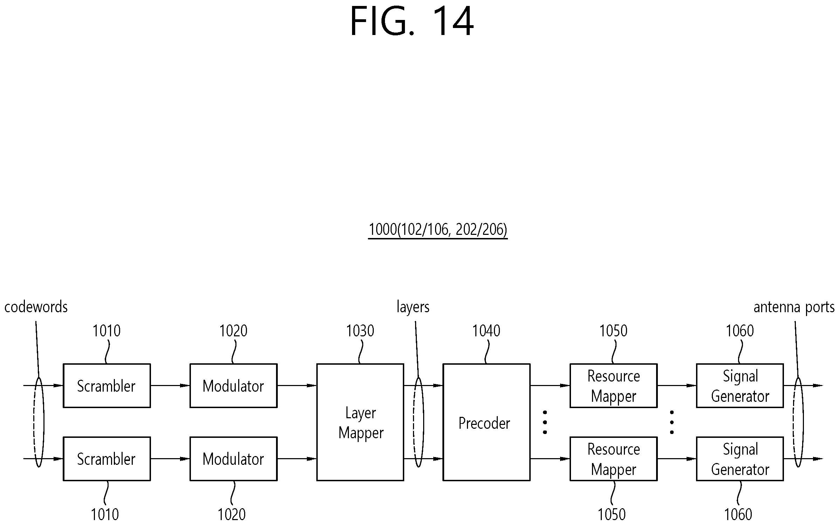

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13.

Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

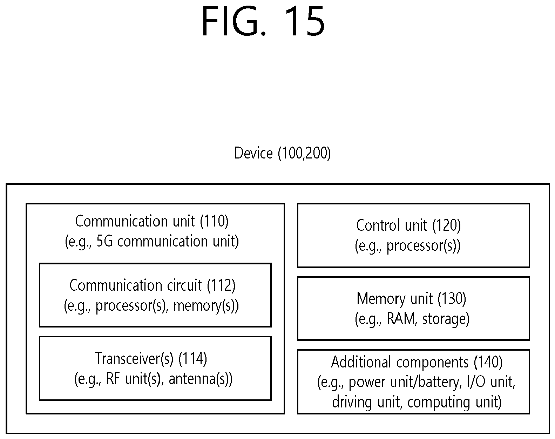

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

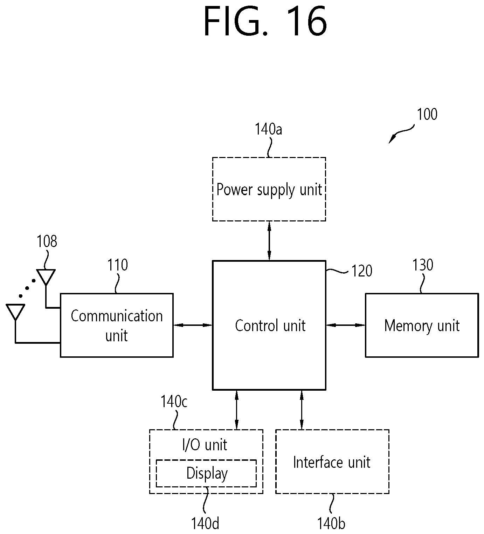

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

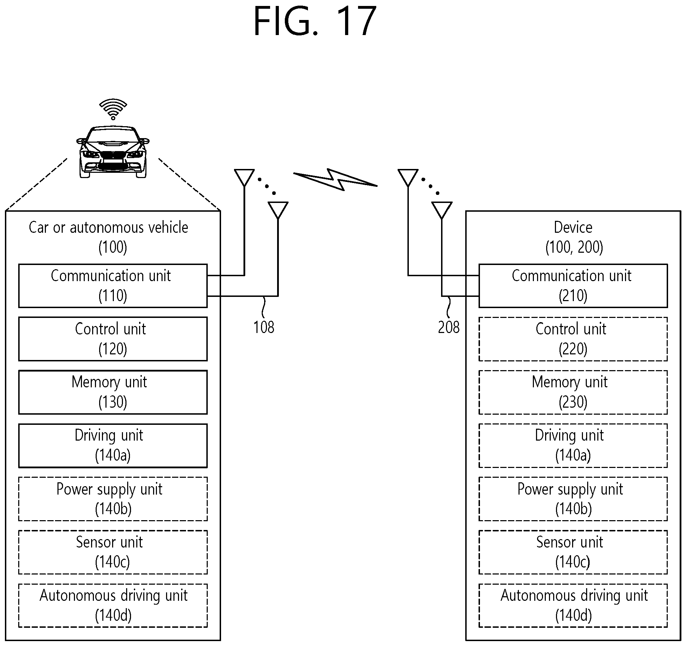

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

**Claims**

1. A method for performing, by a first device (100), wireless communication, the method comprising:

    receiving (S810, S1010), from a second device (200), an inter UE coordination, IUC, request;
    triggering (S820, S1020) an IUC information report based on the IUC request;
    generating (S830, S1030) a medium access control, MAC, protocol data unit, PDU, including an IUC report MAC control element, CE, based on logical channel prioritization, LCP;
    transmitting (S1040), to the second device (200), first sidelink control information, SCI, for scheduling of a physical sidelink shared channel, PSSCH, through a physical sidelink control channel, PSCCH; and
    transmitting (S840, S1050), to the second device (200) through the PSSCH, i) the MAC PDU and ii) second SCI including a destination layer-2 ID related to the transmission of the IUC report MAC CE only,
    wherein the IUC report MAC CE includes information related to a preferred resource set.

2. The method of claim 1, wherein the sidelink communication is groupcast communication or broadcast communication.

3. The method of claim 1, wherein a priority of a request based IUC report MAC CE is higher than a priority of a condition based IUC report MAC CE.

4. The method of claim 1, wherein a procedure related to the LCP is performed based on remaining space of a MAC PDU.

5. The method of claim 1, wherein at least one transmission resource is selected by the second device (200), based on the IUC report MAC CE.

6. The method of claim 1, wherein the IUC report MAC CE includes information related to a non-preferred resource set.

7. The method of claim 1, wherein a procedure related to the LCP is for including a MAC serving data unit, SDU, or a MAC CE in the MAC PDU in order of priority of a related logical channel, LCH.

8. The method of claim 1, wherein a MAC PDU including an IUC report MAC CE being multiplexed based on a same destination ID with a MAC PDU not including an IUC report MAC CE is not allowed.

9. The method of claim 1, wherein the destination ID is available for broadcast, groupcast, and unicast.

10. The method of claim 1, wherein the MAC PDU is generated (S830, S1030) based on a radio resource control, RRC, connection being established between the first device (100) and the second device (200).

11. A first device (100) for performing wireless communication, the first device (100) comprising:

    one or more memories (104) storing instructions; and
    one or more processors (102) connected to the one or more memories (104), wherein the one or more processors (102) execute the instructions to:

        receive (5810, S 1010), from a second device (200), an inter UE coordination, IUC, request;

trigger (S820, 51020) an IUC information report based on the IUC request;
generate (S830, S 1030) a medium access control, MAC, protocol data unit, PDU, including an IUC report MAC control element, CE, based on logical channel prioritization, LCP;
transmit (S1040), to the second device (200), first sidelink control information, SCI, for scheduling of a physical sidelink shared channel, PSSCH, through a physical sidelink control channel, PSCCH; and
transmit (S840, S1050), to the second device (200) through the PSSCH, i) the MAC PDU and ii) second SCI including a destination layer-2 ID related to the transmission of the IUC report MAC CE only, wherein the IUC report MAC CE includes information related to a preferred resource set.

12. The first device (100) of claim 11, wherein the first device (100) further comprises one or more transceivers (106) controlled by the one or more processors (102) to perform the transmission and reception operations.

**Patentansprüche**

1. Verfahren zum Durchführen, durch eine erste Vorrichtung (100), von drahtloser Kommunikation, wobei das Verfahren Folgendes umfasst:

Empfangen (S810, S1010), von einer zweiten Vorrichtung (200), einer Inter-UE-Koordinationsanfrage bzw. IUC-Anfrage;
Auslösen (S820, S1020) eines IUC-Informationenreports auf der Grundlage der IUC-Anfrage;
Erzeugen (S830, S1030) einer Medienzugangssteuerung-Protokolldateneinheit, MAC PDU, einschließlich eines IUC-Report-MAC-Steuerelements, IUC-Report MAC CE, auf der Grundlage von Logischer-Kanal-Priorisierung, LCP;
Senden (S1040), an die zweite Vorrichtung (200), von ersten Sidelink-Steuerungsinformationen, SCI, zum Einplanen eines physischen Sidelink-Gemeinkanals, PSSCH, durch einen physischen Sidelink-Steuerkanal, PSCCH; und
Senden (S840, S1050), an die zweite Vorrichtung (200) durch den PSSCH, von i) der MAC PDU und ii) der SCI einschließlich einer Bestimmungsschicht-2-ID, die nur die Sendung des IUC-Report MAC CE betrifft, wobei das IUC-Report MAC CE Informationen beinhaltet, die einen bevorzugten Ressourcensatz betreffen.

2. Verfahren nach Anspruch 1, wobei die Sidelink-Kommunikation Gruppensendung-Kommunikation oder Rundsendung-Kommunikation ist.

3. Verfahren nach Anspruch 1, wobei eine Priorität eines Anfrage-basierten IUC-Report MAC CE höher als eine Priorität eines Bedingung-basierten IUC-Report MAC CE ist.

4. Verfahren nach Anspruch 1, wobei eine die LCP betreffende Prozedur auf der Grundlage von verbliebenem Raum einer MAC PDU durchgeführt wird.

5. Verfahren nach Anspruch 1, wobei mindestens eine Senderessource durch die zweite Vorrichtung (200) auf der Grundlage des IUC-Report MAC CE ausgewählt wird.

6. Verfahren nach Anspruch 1, wobei das IUC-Report MAC CE Informationen beinhaltet, die einen nicht-bevorzugten Ressourcensatz betreffen.

7. Verfahren nach Anspruch 1, wobei eine die LCP betreffende Prozedur zum Einschließen einer MAC Bediendateneinheit, SDU oder eines MAC CE in der MAC PDU in Prioritätsreihenfolge eines zugehörigen logischen Kanals, LCH, dient.

8. Verfahren nach Anspruch 1, wobei eine MAC PDU, die ein IUC-Report MAC CE beinhaltet, die auf der Grundlage einer selben Bestimmungs-ID mit einer MAC PDU, die kein IUC-Report MAC CE beinhaltet, gemultiplext wird, nicht zulässig ist.

9. Verfahren nach Anspruch 1, wobei die Bestimmungs-ID für Rundsendung, Gruppensendung und Einzelsendung verfügbar ist.

10. Verfahren nach Anspruch 1, wobei die MAC PDU erzeugt wird (S830, S1030) auf der Grundlage einer Funkressourcensteuerung-Verbindung bzw. RRC-Verbindung, die zwischen der ersten Vorrichtung (100) und der zweiten Vorrichtung (200) erstellt wird.

11. Erste Vorrichtung (100) zum Durchführen von drahtloser Kommunikation, wobei die erste Vorrichtung (100) Folgendes umfasst:

einen oder mehrere Speicher (104), die Anweisungen speichern; und
einen oder mehrere Prozessoren (102), verbunden mit dem einen oder den mehreren Speichern (104), wobei der eine oder die mehreren Prozessoren (102) die Anweisungen ausführen zum:

Empfangen (S810, S1010), von einer zweiten Vorrichtung (200), einer Inter-UE-Koordinationsanfrage bzw. IUC-Anfrage;
Auslösen (S820, S1020) eines IUC-Informationenreports auf der Grundlage der IUC-Anfrage;
Erzeugen (S830, S1030) einer Medienzugangssteuerung-Protokolldateneinheit, MAC PDU, einschließlich eines IUC-Report-MAC-Steuerelements, IUC-Report MAC CE, auf der Grundlage von Logischer-Kanal-Priorisierung, LCP;
Senden (S1040), an die zweite Vorrichtung (200), von ersten Sidelink-Steuerungsinformationen, SCI, zum Einplanen eines physischen Sidelink-Gemeinkanals, PSSCH, durch einen physischen Sidelink-Steuerkanal, PSCCH; und
Senden (S840, Sl050), an die zweite Vorrichtung (200) durch den PSSCH, von i) der MAC PDU und ii) der SCI einschließlich einer Bestimmungsschicht-2-ID, die nur die Sendung des IUC-Report MAC CE betrifft, wobei das IUC-Report MAC CE Informationen beinhaltet, die einen bevorzugten Ressourcensatz betreffen.

12. Erste Vorrichtung (100) nach Anspruch 11, wobei die erste Vorrichtung (100) ferner einen oder mehrere Sender-Empfänger (106) umfasst, die durch den einen oder die mehreren Prozessoren (102) gesteuert werden, die Sendeund Empfangsoperationen durchzuführen.

**Revendications**

1. Procédé pour l'exécution, par un premier dispositif (100), d'une communication sans fil, ce procédé comprenant :

la réception (S810, S1010), en provenance d'un deuxième dispositif (200), d'une demande de coordination inter-UE, IUC ;
le déclenchement (S820, S1020) d'un rapport d'information IUC en se basant sur la demande IUC ;
la génération (S830, S1030) d'une unité de données de protocole, PDU, de contrôle d'accès au support, MAC, comprenant un élément de contrôle MAC de rapport IUC, CE, en se basant sur une priorisation de canaux logiques, LCP ;
la transmission (S1040), au deuxième dispositif (200), de premières informations de contrôle de liaison latérale, SCI, pour la programmation d'un canal physique partagé de liaison latérale, PSCCH, au moyen d'un canal physique de contrôle de liaison latérale, PSSCH ;3 et
la transmission (S840, 51050), à un deuxième dispositif (200), par l'intermédiaire du canal PSSCH, i) de l'unité PDU MAC et 2) de deuxièmes informations SCI comprenant une ID de couche 2 de destination liée à la transmission de l'élément CE MAC de rapport IUC,
l'élément CE MAC de rapport IUC comprenant des informations liées à un ensemble de ressources préféré.

2. Procédé selon la revendication 1, dans lequel la communication par liaison latérale est une communication diffusée en groupe ou une communication radiodiffusée.

3. Procédé selon la revendication 1, dans lequel une priorité d'un élément CE MAC de rapport IUC basé sur demande est plus grande qu'une priorité d'un élément CE MAC de rapport IUC basé sur condition.

4. Procédé selon la revendication 1, dans lequel une procédure liée à la priorisation LCP est exécutée en se basant sur l'espace restant d'une unité PDU MAC.

5. Procédé selon la revendication 1, dans lequel au moins une ressource de transmission est sélectionnée par le deuxième dispositif (200), en se basant sur l'élément CE MAC de rapport IUC.

**6.** Procédé selon la revendication 1, dans lequel l'élément CE MAC de rapport IUC comprend des informations liées à un ensemble de ressources non préféré.

**7.** Procédé selon la revendication 1, dans lequel une procédure liée à la priorisation LCP sert à inclure une unité de données de desserte, SDU MAC, ou un élément CE MAC dans l'unité PDU MAC par ordre de priorité d'un canal logique associé, LCH.

**8.** Procédé selon la revendication 1, dans lequel une unité PDU MAC comprenant un élément CE MAC de rapport IUC étant multiplexée en se basant sur la même ID de destination avec une unité PDU MAC ne comprenant pas d'élément CE MAC de rapport IUC n'est pas permise.

**9.** Procédé selon la revendication 1, dans lequel l'ID de destination est disponible pour une radiodiffusion, une diffusion en groupe et une monodiffusion.

**10.** Procédé selon la revendication 1, dans lequel l'unité PDU MAC est générée (S830, S1030) en se basant sur une connexion de contrôle de ressource radio, RRC, étant établie entre le premier dispositif (100) et le deuxième dispositif (200).

**11.** Premier dispositif (100) pour exécuter une communication sans fil, ce premier dispositif (100) comprenant :

une ou plusieurs mémoires (104) stockant des instructions ; et
un ou plusieurs processeurs (102) connectés à cette ou ces mémoires (104), ce ou ces processeurs (102) exécutant les instructions pour :

recevoir (S810, S1010), en provenance d'un deuxième dispositif (200), une demande de coordination inter-UE, IUC ;
déclencher (S820, S1020) un rapport d'information IUC en se basant sur la demande IUC ;
générer (S830, S1030) une unité de données de protocole, PDU, de contrôle d'accès au support, MAC, comprenant comprenant un élément de contrôle MAC de rapport IUC, CE, en se basant sur une priorisation de canaux logiques, LCP ;
transmettre (S1040), au deuxième dispositif (200), des premières informations de contrôle de liaison latérale, SCI, pour la programmation d'un canal physique partagé de liaison latérale, PSCCH, au moyen d'un canal physique de contrôle de liaison latérale, PSSCH : et pour
transmettre (S840, S1050), au deuxième dispositif (200), par l'intermédiaire du canal PSSCH, i) l'unité PDU MAC et 2) des deuxièmes informations SCI comprenant une ID de couche 2 de destination liée à la transmission de l'élément CE MAC de rapport IUC uniquement,
l'élément CE MAC de rapport IUC comprenant des informations liées à un ensemble de ressources préféré.

**12.** Premier dispositif (100) selon la revendication 11, ce premier dispositif (100) comprenant en outre un ou plusieurs émetteurs-récepteurs (106) commandés par le ou les processeurs (102) pour exécuter les opérations de transmission et de réception.

# FIG. 1

# FIG. 2

EP 4 224 970 B1

**UE**
- SDAP
- PDCP
- RLC
- MAC
- PHY

**gNB**
- SDAP
- PDCP
- RLC
- MAC
- PHY

(a)

**UE**
- NAS
- RRC
- PDCP
- RLC
- MAC
- PHY

**gNB**
- RRC
- PDCP
- RLC
- MAC
- PHY

**AMF**
- NAS

(b)

**UE A**
- SDAP
- PDCP
- RLC
- MAC
- PHY

**UE B**
- SDAP
- PDCP
- RLC
- MAC
- PHY

PC5-U

(c)

**UE A**
- RRC
- PDCP
- RLC
- MAC
- PHY

**UE B**
- RRC
- PDCP
- RLC
- MAC
- PHY

PC5-C

(d)

# FIG. 3

# FIG. 4

Resource grid

A carrier
(up to 3300 subcarriers,
i.e., 275 RBs)

A BWP

1RB=12 subcarriers

1 RE

1subcarrier

1 symbol

l=0 ...

k=0

EP 4 224 970 B1

# FIG. 5

PRB N3

PRB 1

PRB 0

$N_{BWP, 2}^{size}$

PRB N2

PRB 1

PRB 0

$N_{BWP, 1}^{size}$

PRB N1

PRB 1

PRB 0

$N_{BWP, 0}^{size}$

CRB 0

$N_{BWP, 0}^{start}$

$N_{BWP, 1}^{start}$

$N_{BWP, 2}^{start}$

Carrier
Bandwidth

Freq.

Time

PRB 0 (Point A) in reference resource block

# FIG. 6

| BS | UE 1 | UE 2 | | UE 1 | UE 2 |

resource
scheduling
→ S600

PSCCH → S610

PSSCH → S620

PSFCH ← S630

PUCCH/PUSCH ← S640

(a)

PSCCH → S610

PSSCH → S620

PSFCH ← S630

(b)

# FIG. 7

(a)　　　　　　　　(b)　　　　　　　　(c)

● : TX UE

⊘ : RX UE

# FIG. 8

# FIG. 9

EP 4 224 970 B1

order of
highest priority

| IUC report MAC CE |
| Data from an SCCH |
| SL CSI reporting MAC CE |
| SL DRX command MAC CE |
| Data from an STCH |

| MAC PDU |

| IUC report MAC CE | SL CSI reporting MAC CE |

| SL DRX command MAC CE |

----- included

----- not included

# FIG. 10

| | |
|---|---|
| vreceiving, from a second device, an IUC request | S1010 |
| triggering an IUC information report<br>based on an IUC request | S1020 |
| generating a MAC PDU including<br>an IUC report MAC CE, based on LCP | S1030 |
| transmitting, to a second device,<br>first SCI for scheduling of a PSSCH through a PSCCH | S1040 |
| transmitting, to a second device,<br>a MAC PDU and second SCI through a PSSCH | S1050 |

# FIG. 11

| transmitting, to a first device, an IUC request | S1110 |

↓

| receiving, from a first device,<br>first SCI for scheduling of a PSSCH through a PSCCH | S1120 |

↓

| receiving, from a first device,<br>a MAC PDU including an IUC report MAC CE<br>and second SCI through PSSCH | S1130 |

↓

| selecting at least one transmission resource<br>based on an IUC report MAC CE | S1140 |

# FIG. 12

<u>1</u>

EP 4 224 970 B1

# FIG. 13

EP 4 224 970 B1

# FIG. 14

1000(102/106, 202/206)

codewords

layers

antenna ports

| 1010 | 1020 | 1030 | 1040 | 1050 | 1060 |

Scrambler → Modulator →

Layer Mapper

Precoder

Resource Mapper → Signal Generator

Scrambler → Modulator →

Resource Mapper → Signal Generator

| 1010 | 1020 | | | 1050 | 1060 |

# FIG. 15

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 16

100

140a
Power supply unit

108

110
Communication unit

120
Control unit

130
Memory unit

140c
I/O unit
Display

140d

Interface unit

140b

# FIG. 17

**Car or autonomous vehicle (100)**

- Communication unit (110)
- Control unit (120)
- Memory unit (130)
- Driving unit (140a)
- Power supply unit (140b)
- Sensor unit (140c)
- Autonomous driving unit (140d)

108

**Device (100, 200)**

- Communication unit (210)
- Control unit (220)
- Memory unit (230)
- Driving unit (140a)
- Power supply unit (140b)
- Sensor unit (140c)
- Autonomous driving unit (140d)

208

**REFERENCES CITED IN THE DESCRIPTION**

**Non-patent literature cited in the description**

•   Stage 2 Running CR of TS 38.300 for eSL. *3GPP change request R2-2201808*